(19) **Europäisches Patentamt / European Patent Office / Office européen des brevets**

(11) **EP 4 362 129 A1**

(12) **EUROPEAN PATENT APPLICATION**
published in accordance with Art. 153(4) EPC

(43) Date of publication:
**01.05.2024 Bulletin 2024/18**

(21) Application number: **22828057.4**

(22) Date of filing: **19.04.2022**

(51) International Patent Classification (IPC):
**H01M 4/06** (2006.01)   **H01M 4/134** (2010.01)
**H01M 4/40** (2006.01)   **H01M 4/50** (2010.01)
**H01M 6/16** (2006.01)   **H01M 10/052** (2010.01)
**H01M 10/0587** (2010.01)

(52) Cooperative Patent Classification (CPC):
**H01M 4/06; H01M 4/134; H01M 4/40; H01M 4/50;**
**H01M 6/16; H01M 10/052; H01M 10/0587;**
Y02E 60/10; Y02P 70/50

(86) International application number:
**PCT/JP2022/018113**

(87) International publication number:
**WO 2022/270138 (29.12.2022 Gazette 2022/52)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **22.06.2021 JP 2021103581**

(71) Applicant: **Panasonic Intellectual Property Management Co., Ltd.**
**Kadoma-shi, Osaka 571-0057 (JP)**

(72) Inventors:
• **KAWAHARA Yusuke**
 **Kadoma-shi, Osaka 571-0057 (JP)**
• **MIYAHARA Katsuya**
 **Kadoma-shi, Osaka 571-0057 (JP)**

(74) Representative: **Novagraaf International SA**
**Chemin de l'Echo 3**
**1213 Onex, Geneva (CH)**

(54) **WOUND NON-AQUEOUS ELECTROLYTE BATTERY**

(57)    A wound non-aqueous electrolyte battery includes a positive electrode, a negative electrode, a separator provided between the positive and negative electrodes, and a non-aqueous electrolyte. The negative electrode includes a lithium-aluminum alloy sheet. The lithium-aluminum alloy sheet has surfaces including a surface of which parts are flush and connected with one another via grain boundaries of lithium-aluminum alloy. An average grain boundary number N is 8.75 or less, the average grain boundary number N being provided as $\Sigma G_i / \Sigma L_i$ by dividing $\Sigma G_i$ by $\Sigma L_i$, where $\Sigma G_i$ is a sum of numbers of grain boundaries $G_i$ out of the plurality of grain boundaries which intersect M line segments $PQ_i$ respectively connecting point $P_i$ to point $Q_i$ on the surface of the lithium-aluminum alloy sheet, $\Sigma L_i$ is a sum of lengths $L_i$ of the M line segments $PQ_i$, M is an integer greater than 1, and i is an integer satisfying $1 < i \leq M$).

FIG. 1

EP 4 362 129 A1

**Description**

TECHNICAL FIELD

The present disclosure relates to a wound non-aqueous electrolyte battery.

BACKGROUND ART

As a structure of a negative electrode of a non-aqueous electrolyte battery, a negative electrode including an aluminum foil attached to lithium and a negative electrode including lithium-aluminum alloy (Li-Al alloy) have been proposed.

PTL 1 describes that, in manufacturing the non-aqueous electrolyte battery including lithium-aluminum alloy for the negative electrode, a non-aqueous electrolyte battery with good productivity and good load characteristics until an end stage of a discharging period by cutting a foil of lithium-aluminum alloy containing lithium of 80 atom% or more into a rectangular shape and placing the rectangular lithium-aluminum alloy piece in a negative electrode can to perform rolling.

PTL 2 discloses a negative electrode including lithium as active material that is used for an organic electrolyte primary battery and aluminum placed on a positive electrode side of a surface of lithium. Lithium is defused toward aluminum and Li-Al alloy is formed electrochemically. PTL 2 employs aluminum with temper designation of $H_{16}$ or $H_{28}$ in accordance with JIS H 0001, which is entirely or mostly without annealing treatment after rolling. This configuration provides a battery with low internal resistance and good pulse discharge characteristics.

PTL 3 proposes the use of light metal powder with an average grain size ranging from 10 $\mu$m to 300 $\mu$m or a porous aggregate of light metal alloy powder (e.g., Li-Al alloy particles) for the negative electrode in order to improve heavy load characteristics of the non-aqueous electrolyte battery.

Citation List

Patent Literature

   PTL 1: Japanese Patent Laid-Open Publication No. 2005-340116
   PTL 2: Japanese Patent Laid-Open Publication No. 04-2050
   PTL 3: Japanese Patent Laid-Open Publication No. 63-308869

SUMMARY OF INVENTION

In a method disclosed in PTL 1, a Li-Al alloy negative electrode is placed in a negative can and then rolled to press-bond the Li-Al alloy negative electrode inside the negative can. However, this method is hardly applied to a battery employing a wound electrode group in which a negative plate, a positive plate, and a separator are wound. In addition, a grain boundary of the Li-Al alloy tends to crack at rolling the negative electrode onto the negative can. This may decrease discharge characteristics.

In a battery disclosed in PTL 2, the Li-Al alloy is pulverized and a gap exists between interfaces of Li-Al alloy particles. In a deep discharge state (e.g., depth of charge (DOD) of 90% or more), the gap expands and an electrical connection path between the particles tends to break. As a result, similar to PTL 1, conductivity of the negative electrode at an end stage of a discharging period decreases, and output characteristics at low temperatures may decrease. In a battery disclosed in PTL 3, a gap exists between the Li-Al alloy particles, similar to the battery of PTL2, and thus the output characteristics at low temperatures may decrease at an end stage of the discharging period.

A wound non-aqueous electrolyte battery in one aspect of the present disclosure includes a positive electrode, a negative electrode, a separator provided between the positive and negative electrodes, and a non-aqueous electrolyte. The negative electrode includes a lithium-aluminum alloy sheet. The lithium-aluminum alloy sheet has surfaces including a surface of which parts are flush and connected with one another via grain boundaries of lithium-aluminum alloy. An average grain boundary number N is 8.75 or less, the average grain boundary number N being provided as $\Sigma G_i / \Sigma L_i$ by dividing $\Sigma G_i$ by $\Sigma L_i$, where $\Sigma G_i$ is a sum of numbers of grain boundaries Gi out of the plurality of grain boundaries which intersect M line segments PQi respectively connecting point Pi to point Qi on the surface of the lithium-aluminum alloy sheet, $\Sigma L_i$ is a sum of lengths Li of the M line segments PQi, M is an integer greater than 1, and i is an integer satisfying $1 < i \le M$).

The present disclosure a non-aqueous electrolyte battery maintaining high output characteristics thereof at low temperatures also at an end stage of the discharging period.

BRIEF DESCRIPTION OF DRAWINGS

FIG. 1 is a micrograph magnifying a surface of a negative electrode of a non-aqueous electrolyte battery in accordance with an exemplary embodiment of the present disclosure.
FIG. 2 is a front view of the non-aqueous electrolyte battery in accordance with the exemplary embodiment of the present disclosure for showing a cross-section of a part thereof.
FIG. 3 is a diagram illustrating relation between an average grain boundary number $(G_\alpha+G_\beta)/2$ and a voltage $V_1$ after pulse discharge of a lithium-aluminum alloy sheet employed in a negative electrode of the non-aqueous electrolyte battery in accordance with the embodiment.

DESCRIPTION OF EMBODIMENT

A wound non-aqueous electrolyte battery (hereinafter also simply referred to as a "non-aqueous electrolyte battery) in accordance with an exemplary embodiment of the present disclosure includes a positive electrode, a negative electrode, a separator provided between the positive electrode and the negative electrode, and a non-aqueous electrolyte. The negative electrode includes a lithium-aluminum alloy sheet (a Li-Al alloy sheet). The wound non-aqueous electrolyte battery often includes a wound electrode group including strips of the positive electrode and the negative electrode spirally wound with the separator therebetween.

Surfaces of the Li-Al alloy sheet includes a surface of which parts are flush and connected with one another via grain boundaries of lithium-aluminum alloy. This configuration maintains electrical connection between Li-Al alloy particles even at an end stage of a discharging period.

In a microscopic view, a surface of the Li-Al alloy sheet includes exposed surfaces of the Li-Al alloy particles separated via grain boundaries, and the exposed surfaces are connected to one another . Normally, the exposed surfaces of the Li-Al alloy particles are not parallel to one another, and therefore, provide the surface of the Li-Al alloy sheet with fine roughness. In addition, a porous Li-Al alloy sheet has a gap between the Li-Al alloy particles.

Surface of the Li-Al alloy sheet including a surface of which parts are flush and connected with one another via grain boundaries implies, firstly, that the Li-Al alloy sheet is not porous and has substantially no gap between the Li-Al alloy particles. In this case, the exposed surfaces of the Li-Al alloy particles are mutually connected via the grain boundaries to form a single surface of the Li-Al alloy sheet as a whole. Secondly, the exposed surfaces of the Li-Al alloy particles are substantially parallel to one another and are also flush and connected with one another substantially on the same plane. This means that the surface of the Li-Al alloy sheet is flat substantially without roughness. A surface roughness of the Li-Al alloy sheet may be, for example, not greater than 0.8 $\mu$m or not greater than 0.4 $\mu$m in arithmetic average roughness Ra specified by JIS B 0061:2001.

During discharge, the lithium tends to be preferentially consumed from parts thereof close to the grain boundaries of the Li-Al alloy sheet. In the case that the surface of the Li-Al alloy sheet has fine dents or gaps therein caused by the grain boundaries, lithium in the dents tends to be preferentially consumed, and a depth of each dent increases or a gap is expanded. As a result, electrical connection between the Li-Al alloy particles may be cut. In contrast, the surface of the Li-Al alloy sheet of which parts are flush and connected with one another surface via grain boundaries allows the battery to be discharged evenly such that the thickness of the Li-Al alloy sheet evenly decreases over the entire surface area during discharge. As a result, a thin film of the Li-Al alloy sheet remains even at an end stage of the discharging period, and maintains the electrical connection between the Li-Al alloy particles.

Two arbitrary points P and Q on the surface of the Li-Al alloy sheet are selected. Length L (mm) is a length of straight line segment PQ. Points P and Q are preferably selected to allow the line segment to have length L of 1 mm or more. A metal structure of the surface of the Li-Al alloy sheet is observed with a microscope or the like to identify grain boundaries by image processing of a captured image. Then, the number G of grain boundaries of lithium-aluminum alloy intersecting line segment PQ is obtained. More specifically, M groups of points Pi and Qi (Points $P_1$ and $Q_1$, points $P_2$ and $Q_2$, ..., points $P_M$ and $Q_M$) are selected where M is an integer greater than 1 and i is an integer satisfying $1 < i \le M$. The number Gi ($G_i$, $G_2$, ..., $G_M$) of grain boundaries intersecting line segments PQi connecting point Pi to Qi and lengths Li ($L_1$, $L_2$, ..., $L_M$) (mm) of line segments PQi ($PQ_1$, $PQ_2$, ..., $PQ_M$) are obtained. The points may be preferably selected such that at least two groups out of plural groups of points Pi and Qi form line segments PQi not parallel to one another. In other words, points Pi and Qi may be preferably selected such that at least two line segments out of M line segments PQi are not parallel to one another. With respect to M line segments $PQ_i$, the sum $\Sigma G_i$ ($\Sigma G_i = G_1+G_2+...+G_M$) of the numbers $G_i$ ($G_1$, $G_2$, ..., $G_M$) of the grain boundaries is divided by the sum $\Sigma L_i$ ($\Sigma L_i = L_1+L_2+...+L_M$) of length Li ($L_1$, $L_2$ ,..., $L_M$) of line segments $PQ_i$ ($PQ_1$, $PQ_2$, ..., $PQ_M$), which is $\Sigma G_i/\Sigma L_i$, to obtain an average grain boundary number N. Sum

$\Sigma L_i$ of length $L_i$ is preferably 3 mm or more. The average grain boundary number N is 8.75 or less. As described above, the average grain boundary number N is 8.75 or less when $\Sigma G_i / \Sigma L_i$, in the plurality of grain boundaries, is calculated by dividing the sum $\Sigma G_i$ of numbers Gi of grain boundaries intersecting M line segments PQi, respectively connecting points Pi and Qi on the surface of the lithium-aluminum alloy sheet by sum $\Sigma L_i$ of lengths Li of M line segments $PQ_i$. Average grain boundary number N is preferably equal to or more than 3.12 and equal to or less than 8.75, more preferably is equal to or more than 3.12 and equal to or less than 7.5, and is further preferably equal to or more than 3.12 and equal to or less than 6.25.

The average grain boundary number N of 8.75 or less sufficiently reduces the sum of grain boundary lengths in the Li-Al alloy sheet, and suppresses an increase of internal resistance in the non-aqueous electrolyte battery due to grain boundaries becoming a resistance component. As a result, high output characteristics are also maintained even at an end stage of a discharging period.

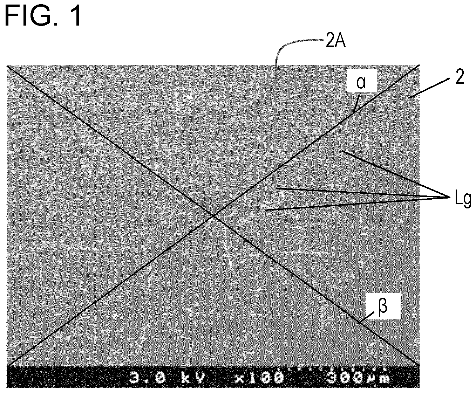

FIG. 1 illustrates an example of a micrograph (SEM image) magnifying the surface of the Li-Al alloy sheet that is the negative electrode employed in the non-aqueous electrolyte battery according to the embodiment of the present disclosure. White portions in FIG. 1 denote grain boundaries Lg.

In this example, a rectangular region of 1.28 mm $\times$ 0.96 mm on the surface of the Li-Al alloy sheet is selected. This rectangular region has two diagonal lines $\alpha$ and $\beta$. An average grain boundary N is calculated according to the following formula where number $G_\alpha$ is the number of grain boundaries of lithium-aluminum alloy intersecting one diagonal line $\alpha$, number $G_\beta$ is the number of grain boundaries of lithium-aluminum alloy intersecting another diagonal line $\beta$, and L (mm) is a length of diagonal lines $\alpha$ and $\beta$.

$$N = (G_\alpha + G_\beta)/(2 \cdot L)$$

Since length L of diagonal lines $\alpha$ and $\beta$ is 1.6 mm, the average grain boundary number N is 8.75 or less if $(G_\alpha + G_\beta)/2$ is 14 or less. Thus, high output characteristics is maintained at an end stage of the discharging period. Accordingly, average grain boundary number N is 8.75 or less when $(G_\alpha + G_\beta)/2$ is 14 or less. $(G_\alpha + G_\beta)/2$ is preferably equal to or more than 5 and equal to or less than 14, and is more preferably equal to or more than 5 and equal to or less than 12 or is equal to or more than 5 and equal to or less than 10.

As difference $|G_\alpha - G_\beta|$ between number $G_\alpha$ and number $G_\beta$ becomes greater, a difference in grain size of Li-Al alloy particles in a direction of diagonal line $\alpha$ and a direction of diagonal line $\beta$ increases, which means larger anisotropy. As an indicator for evaluating anisotropy, grain boundary aspect ratio A expressed by A = $|G_\alpha - G_\beta|/(G_\alpha + G_\beta)$ is obtained. Grain boundary aspect ratio A is preferably 0.2 or less. In this case, an effect of maintaining high output characteristics is enhanced even at an end stage of the discharging period. More specifically, high output characteristics is maintained in a deeper depth of discharge (e.g., depth of discharge of 95% or more).

The Li-Al alloy sheet satisfying the above relation of the average grain boundary number (or relation of $G_\alpha$ and $G_\beta$) and having the surface of which parts are flush and connected with one another via grain boundaries is manufactured, for example, using a Li-Al alloy ingot obtained by cooling a molten liquid of Li and Al. By controlling a cooling speed (i.e., solidification speed) of the molten liquid, average grain boundary number N (or $(G_\alpha + G_\beta)/2$) of the ingot is controlled to a desired value.

The Li-Al alloy ingot is, for example, formed into a sheet with a predetermined thickness by extrusion molding to provide the Li-Al alloy sheet. Extrusion molding provides the surface of which parts are flush and connected with one another via grain boundaries on the surface of the Li-Al alloy sheet. Difference $|G_\alpha - G_\beta|$ may be controlled by controlling an extrusion speed of extrusion molding. As a result, grain boundary aspect ratio A is controlled to have a required value.

The surface of which parts are flush and connected with one another via the grain boundaries preferably occupies 80% or more of the surface of the Li-Al alloy sheet. More specifically, when ten arbitrary regions of 1.28 mm $\times$ 0.96 mm on the surface of Li-Al alloy sheet are selected, eight or more regions out of the ten regions preferably satisfy the above relation of the average grain boundary number N.

An Al content in the Li-Al alloy is preferably equal to or more than 0.3 mass% and equal to or less than 1.0 mass%. Average grain boundary number N (or $(G_\alpha + G_\beta)/2$) may decrease by reducing the Al content, but the grain boundary aspect ratio A tends to increase. On the other hand, larger Al content may easily reduce grain boundary aspect ratio A, but hardly provides average grain boundary number N of 8.75 or less (or $(G_\alpha + G_\beta)/2$ of 14 or less). In the case that the Al content exceeds 1.0 mass%, the cooling speed of molten liquid needs to be made slow more than necessary in order to obtain Li-Al alloy with small average grain boundary number N. This reduces production efficiency. However, I the case that the Al content equal to or more than 0.3 mass% and equal to or less than 1.0 mass%, $(G_\alpha + G_\beta)/2$ and grain boundary aspect ratio A may easily controlled without decreasing production efficiency and the effect of maintaining high output characteristics can be enhanced also in the discharge terminal period.

The Li-Al alloy sheet is preferably not rolled, except for the above-described extrusion molding. Rolling may cause fine cracks in the Li-Al alloy sheet. This may generate gaps between the Li-Al alloy particles, and the gaps expand by discharge. Expanded gaps may cut electrical connection paths between the particles. As a result, the output characteristics at low temperatures may decrease. However, the unrolled Li-Al alloy sheet suppresses a decrease in the output characteristics also in the discharge terminal period and improve the output characteristics at low temperatures.

The present disclosure is applicable to any wound non-aqueous electrolyte battery, regardless of a primary or secondary battery and structures of the positive and negative electrodes, as long as the negative electrode includes the above-described Li-Al alloy sheet. In particular, in the case that the present disclosure is applied to a lithium primary battery including at least one of metal lithium and lithium alloy in the negative electrode, a high capacity battery with good discharge characteristics can be achieved.

The battery of the present disclosure is not particularly limited to the wound non-aqueous electrolyte battery. The non-aqueous electrolyte battery according to the exemplary embodiment will be further detailed as a cylindrical lithium primary battery as an example.

Lithium Primary Battery

Positive Electrode

The positive electrode may include a positive mixture layer and a positive collector that holds the positive mixture layer. The positive collector is, for example, an expand metal, a net, or a punching metal of stainless steel. The positive mixture layer is obtained by, for example, adding an appropriate amount of water to a positive active material and additive to prepare a wet positive mixture, pressurizing the wet positive mixture in a thickness direction so as to fill a mesh of expand metal, and then drying and rolling the positive mixture to a predetermined thickness.

The positive active material included in the positive electrode is, for example, manganese dioxide. The positive electrode including manganese dioxide generates a relatively high voltage and has good pulse discharge characteristics. Manganese dioxide may also be in a mixed crystal state containing plural types of crystal states. The positive electrode may contain manganese oxides other than manganese dioxide. Manganese oxides other than manganese dioxide are, for example, $MnO$, $Mn_3O_4$, $Mn_2O_3$, and $Mn_2O_7$. A main component of manganese oxides included in the positive electrode is preferably manganese dioxide.

Lithium may be doped in part of manganese dioxide included in the positive electrode. A small lithium doping quantity secures high capacity. Manganese dioxide and manganese dioxide doped with a small quantity of lithium is be expressed as $Li_xMnO_2$ ($0 \leq x \leq 0.05$). An average composition of overall manganese oxides included in the positive electrode may be $Li_xMnO_2$ ($0 \leq x \leq 0.05$). Proportion x of Li in an initial discharge period of the lithium primary battery may be 0.05 or less. In general, proportion x of Li increases as discharge of the lithium primary battery advances. The oxidation number of manganese contained in manganese dioxide is theoretically 4. However, the oxidation number of manganese may become smaller than 4 due to manganese dioxide being doped with lithium. Therefore, an average oxidation number of manganese in $Li_xMnO_2$ is acceptable to be slightly less than 4.

The positive electrode main contain other positive active materials used in the lithium primary battery. For example, the other positive active material may be, e.g., graphite fluoride. A percentage of $Li_xMnO_2$ in the whole positive active material may be 90 mass% or more.

Electrolytic manganese dioxide is preferably used as manganese dioxide. As required, electrolytic manganese dioxide subjected to at least neutralization, cleaning, or firing may be used. In general, electrolytic manganese dioxide is obtained by electrolyzing manganese sulfate aqueous solution.

Crystallinity of manganese dioxide may increase and a specific surface area of electrolytic manganese dioxide may decrease by adjusting electrolytic synthesis condition. A BET specific surface area of $Li_xMnO_2$ may be equal to or more than 10 $m^2$/g and equal to or less than 50 $m^2$/g. The BET specific surface area of $Li_xMnO_2$ in this range suppresses a voltage drop during pulse discharge and suppresses gas generation during high-temperature storage in the lithium primary battery. In addition, the positive mixture layer can be easily formed.

The BET specific surface area of $Li_xMnO_2$ is measured by a known method. For example, a specific surface area measuring apparatus (e.g., by MOUNTECH Co., Ltd.) may be used for measurement according to the BET method. For example, $Li_xMnO_2$ separated from the positive electrode taken out from the battery can be used as a measuring sample.

A median of particle sizes of $Li_xMnO_2$ may be equal to or more than 15 $\mu$m and equal to or less than 80 $\mu$m. The median of particle sizes (median diameter D50) in this range allows $Li_xMnO_2$ that is the positive active material to be connected to the collector (expand metal) via a large amount of conductive assistant to enhance current collecting performance. Still more, a decrease in current collecting performance due to uneven distribution of the conductive assistant in gaps between the particles caused by reduced mixture density can be suppressed. As a result, the discharge performance is enhanced and a voltage drop during pulse discharge is suppressed.

The median of particle sizes of $Li_xMnO_2$ is a median of grain size distribution obtained by, for example, the quantitative laser diffraction method (qLD method). For example, $Li_xMnO_2$ separated from the positive electrode taken out from the battery is used as a measuring sample. For measurement, for example, SALD-7500 nano by SHIMADZU Corporation is used.

The positive mixture may further contain a binder in addition to the positive active material. The positive mixture may contain a conductive agent.

The binder is, for example, fluorine resin, rubber particle, or acryl resin.

The conductive agent is, for example, conductive carbon material. The conductive carbon material is, for example, natural graphite, artificial graphite, carbon black, and carbon fiber.

Negative Electrode

The negative electrode includes the lithium-aluminum alloy sheet. The surface of the lithium-aluminum alloy sheet includes a surface of which parts are flush and connected to one another via grain boundaries as described above. The negative electrode may further contain, in addition to the lithium-aluminum alloy sheet, metal lithium and/or lithium alloy other than lithium-aluminum alloy. The negative electrode may be a multilayer sheet including the lithium-aluminum alloy sheet and a sheet containing metal lithium and/or lithium alloy other than lithium-aluminum alloy.

The lithium-aluminum alloy sheet is an alloy sheet including Li and Al. However, the sheet may include elements other than Al that can form alloy with lithium. In the lithium-aluminum alloy sheet, the Al content preferably ranges from 0.3 mass% to 1.0 mass%. In the case that the lithium-aluminum alloy sheet contains an element other than Al that forms alloy with lithium, the content of this element is smaller than the Al content and is, for example, 0.2 mass% or less.

The lithium-aluminum alloy may contain a small quantity of element, such as Sn, Ni, Si, or Pb, that forms alloy with lithium.

The negative electrode including the lithium-aluminum alloy sheet is formed into a predetermined shape and thickness according to the shape, dimensions, and specified performance of the lithium primary battery. More specifically, a cylindrical battery uses, for example, a foil of lithium-aluminum alloy sheet that has a longer direction and a shorter direction.

For the cylindrical battery, a long tape including having a resin base material and an adhesive layer may be attached in the longer direction of at least one main surface of the negative electrode. The main surface refers to a surface facing the positive electrode. A width of this tape is, for example, equal to or more than 0.5 mm and equal to or less than 3 mm. This tape prevents occurrence of a current collection failure due to thinned and cut alloy sheet of the negative electrode when the lithium component in the negative electrode is consumed by reaction in the discharge terminal period.

A material of the resin base material is, for example, fluorine resin, polyimide, polyphenylene sulfide, polyether sulfone, polyolefin such as polyethylene and polypropylene, or polyethylene terephthalate. In particular, the use of polyolefin is preferable, and polypropylene is more preferable.

The binder layer contains, for example, at least one type of component selected from the group of rubber component, silicone component, and acryl resin component. More specifically, synthetic rubber or natural rubber may be used as the rubber component. The synthetic rubber is, for example, butyl rubber, butadiene rubber, styrene-butadiene rubber, isoprene rubber, neoprene, polyisobutylene, acrylonitrile-butadiene rubber, styrene-isoprene block copolymer, styrene-butadiene block copolymer, and styrene-ethylene-butadiene block copolymer. An organic compound having polysiloxane structure, silicone polymer, or the like is used as the silicone component. The silicone polymer is, for example, peroxide-curing type silicone and addition-reaction type silicone. Polymer of acryl monomer, such as acrylic acid, methacrylic acid, acrylic acid ester, and methacrylic acid ester, can be used as the acryl resin component. This includes single polymer or copolymer of acryl monomer such as acrylic acid, methacrylic acid, methyl acrylate, methyl methacrylate, ethyl acrylate, ethyl methacrylate, propyl acrylate, propyl methacrylate, butyl acrylate, butyl methacrylate, octyl acrylate, octyl methacrylate, 2-ethylhexyl acrylate, and 2-ethylhexyl methacrylate. Note that the binder layer may contain crosslinking agent, plasticizer, and tackifier.

Electrolyte

The electrolyte (non-aqueous electrolyte) is a non-aqueous electrolytic solution in which lithium salt or lithium ion is dissolved in a non-aqueous solvent.

Non-Aqueous Solvent

The non-aqueous solvent is organic solvent that is generally used for the non-aqueous electrolyte of the lithium primary battery. The non-aqueous solvent is, for example, ether, ester, or carbonic ester. Dimethyl ether, $\gamma$-butyl lactone, propylene carbonate, ethylene carbonate, or 1, 2-dimethoxyethane can be used as the non-aqueous solvent. The non-aqueous electrolyte may include one type or two or more types of non-aqueous solvent.

In order to enhance the discharge characteristics of the lithium primary battery, the non-aqueous solvent preferably contains cyclic carbonic ester that has high boiling point and chain ether that has low viscosity even at low temperatures. Cyclic carbonic ester preferably includes at least one type selected from the group of propylene carbonate (PC) and ethylene carbonate (EC), and more preferably includes PC. Chain ester preferably has a viscosity of 2 mPa·s or less at 25°C. In particular, chain ester preferably includes dimethoxyethane (DME). A viscosity of the non-aqueous solvent is measured at 25°C and at a shear rate of 10,000 (1/s), with small sample viscometer m-VROC by RheoSense, Inc.

Lithium Salt

Lithium salt is, for example, lithium salt that is used as a solute of the lithium primary battery. This lithium salt is, for example, $LiCF_3SO_3$, $LiN(CF_3SO_2)_2$, $LiClO_4$, $LiBF_4$, $LiPF_6$, $LiR_aSO_3$ ($R_a$ is fluorinated alkyl group with 1 to 4 carbons), $LiFSO_3$, $LiN(SO_2R_b)(SO_2R_c)$ ($R_b$ and $R_c$ are fluorinated alkyl group each having 1 to 4 carbons), $LiN(FSOz)z$, $LiPO_2F_2$, $LiB(C_2O_4)_2$, and $LiBF_2(C_2O_4)$. The non-aqueous electrolyte may include one type or two or more types of these lithium salts.

Others

A concentration of lithium ion in the electrolyte (total concentration of lithium ion) ranges is, for example, from 0.2 mol/L to 2.0 mol/L and may range from 0.3 mol/L to 1.5 mol/L.

The electrolyte may contain an additive as required. The additive is, for example, propanesultone and vinylene carbonate. The total concentration of the additive in the non-aqueous electrolyte ranges, for example, from 0.003 mol/L to 0.5 mol/L.

Separator

The lithium primary battery often includes the separator provided between the positive electrode and the negative electrode. The separator may be made of a porous sheet made of an insulating material resistant to inner environment of the lithium primary battery. Specifically, for example, the separator is made of synthetic resin-made nonwoven fabric, synthetic resin-made microporous film, or their laminate.

Synthetic resin used for the nonwoven fabric is, for example, polypropylene, polyphenylene sulfide, and polybutylene terephthalate. Synthetic resin used for the microporous film is, for example, polyethylene, polypropylene, or polyolefin resin such as ethylene-propylene copolymer. The microporous film may include inorganic particles as required.

A thickness of the separator is, for example, equal to or more than 5 $\mu$m and equal to or less than 100 $\mu$m.

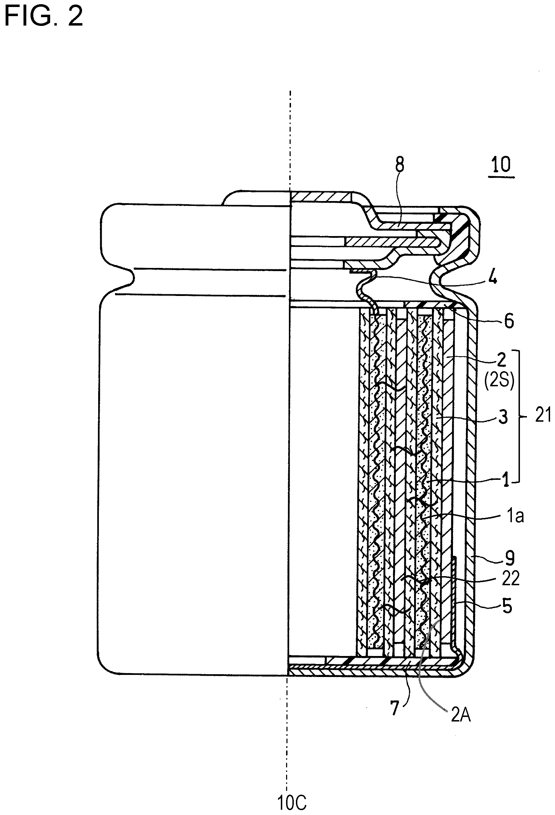

FIG. 2 is a front view of the cylindrical lithium primary battery according to the embodiment of the present disclosure for illustrating a cross-section of a part thereof. In lithium primary battery 10, electrode group 21 of positive electrode 1 and negative electrode 2 stacked on each other across separator 3 is wound about center axis 10C and housed in battery case 9 together with non-aqueous electrolyte 22. Sealing plate 8 is mounted on an opening of battery case 9. Positive electrode lead 4 connected to collector 1a of positive electrode 1 is connected to sealing plate 8. Negative electrode lead 5 connected to negative electrode 2 is connected to case 9. Upper insulation plate 6 and lower insulation plate 7 are disposed on the top and bottom of the electrode group, respectively, to prevent internal short circuit. Negative electrode 2 includes Li-Al alloy sheet 2S. FIG. 1 illustrates surface 2A of Li-Al alloy sheet 2S.

Examples

Examples and comparative examples of the present disclosure will be specifically described below. However, the present disclosure is not limited to the following examples.

Batteries A1-A4, B1, and B2

(1) Preparation of Positive Electrode

100 parts by mass of electrolytic manganese dioxide and 5 parts by mass of ketjen black, a conductive agent, were mixed, and then 5 parts by mass of polytetrafluoroethylene, a binder, and an appropriate amount of pure water were added and kneaded, thereby preparing a wet positive mixture.

The wet positive mixture was applied onto the positive collector made of stainless steel expand metal, and then dried to obtain a positive electrode precursor. Then, the positive electrode precursor was rolled by a roll press to obtain a positive electrode with a predetermined positive mixture density. A thickness of the positive electrode after rolling was adjusted to 0.5 mm.

Then, the positive electrode was cut into strips of 200 mm long × 38 mm wide. A portion of the positive mixture filled was peeled, and a stainless steel tab lead was resistance-welded to an exposed portion of the positive collector.

(2) Preparation of Negative Electrode

The Li-Al alloy sheet was prepared by the following method. The Li-Al alloy sheet was prepared in atmosphere of argon, an inactive gas. First, Li was heated to 350°C to melt, and then a predetermined proportion of Al was mixed with Li to obtain a molten liquid of Li and Al. The molten liquid of Li and Al was put into a mold, and then, the mold containing the molten liquid was cooled to 150°C and kept at 150°C for a predetermined period of time. Then, after cooling the mold to a room temperature, a Li-Al alloy ingot was taken out from the mold. The Al content in the molten liquid was 0.3 mass% with respect to whole Li and Al.

The Li-Al alloy ingot was processed into a sheet with a thickness of 0.2 mm by extrusion molding at an extrusion speed of 50 m/minute to obtain the negative electrode. The surface of the negative electrode obtained is entirely a single surface of which parts connected via grain boundaries. Then, the negative electrode was cut into strips of 210 mm long × width 36 mm wide. A nickel tab lead was connected to a predetermined point of the negative electrode by pressure-welding.

(3) Preparation of Electrode Group

The positive electrode and the negative electrode were stack on each other across the separator and spirally wound to prepare a columnar electrode group with a diameter of 16 mm. The separator was a polyethylene microporous film with a thickness of 20 $\mu$m.

(4) Preparation of Non-Aqueous Electrolyte

PC and DME were mixed to provide a mixture at a volume ratio of 1:2. Lithium trifluoromethanesulfonate (LiCF$_s$SO$_s$) was dissolved in the mixture and adjusted to a concentration of 0.6 mol/L to prepare the non-aqueous electrolyte.

(5) Assembly of Lithium Primary Battery

A cylindrical battery case made of nickel-plated steel plate with a bottom was prepared to have a predetermined size. The electrode group was inserted into the battery case with a lower insulation plate with a ring shape disposed at the bottom. Then, the tab lead of the positive electrode was connected to an inner surface of the sealing plate, and the tab lead of the negative electrode was connected to an inner bottom surface of the battery case.

Next, the non-aqueous electrolyte was put in the battery case, and the upper insulation plate was disposed over the electrode group. Then, an opening of the battery case was sealed with the sealing plate. Then, preparatory discharge was performed on each battery to adjust a battery voltage to 3.2 V The lithium primary batteries (diameter: 17 mm, height: 45 mm) for testing a design capacity of 2500 mAh were thus completed.

In the preparation of the negative electrode, a duration of keeping the molten liquid of Li and Al at 150°C in the ingot was changed to obtain plural types of Li-Al alloy ingots. These ingots were used for the negative electrode to prepare lithium primary batteries A1-A4, B1, and B2 with different negative electrode structures.

The duration of keeping the molten liquid at 150°C was 1 hour, 2 hours, 4 hours, and 8 hours in lithium primary batteries A1-A4, respectively. Lithium primary battery B1 was cooled from 350°C to a room temperature without keeping the molten liquid at 150°C. In lithium primary battery B2, the molten liquid was kept at 150°C for 30 minutes.

Surfaces of the negative electrodes (Li-Al alloy) prepared were observed with a SEM. $G_{\alpha}$ and $G_{\beta}$ were calculated by the aforementioned method from a rectangular region of 1.28 mm × 0.96 mm to calculate $(G_{\alpha}+G_{\beta})/2$ and grain boundary aspect ratio A (= $|G_{\alpha}-G_{\beta}|/(G_{\alpha}+G_{\beta})$). The longer the duration of keeping the molten liquid at 150°C, the more a crystal grain of Li-Al alloy grows. As a result, the average grain boundary number N (and $(G_{\alpha}+G_{\beta})/2$) becomes smaller.

As described above, lithium primary batteries A1-A4, B1, and B2 for testing were prepared and evaluated by a method below.

(6) Evaluation

Constant current discharge of 2.5 mA at 25°C was performed on the lithium primary batteries immediately after their assembly until the depth of discharge (DOD) becomes 90% (Discharge 1).

The batteries after Discharge 1 were placed in an environment at -30°C. Then, the batteries were discharged with pulse current of 300 mA for one second to measure battery voltage (closed circuit voltage)$V_1$ after the pulse discharge.

Battery B3

In the preparation of the negative electrode, an Al foil with a thickness of 7 $\mu$m was attached to both surfaces of the Li foil in the negative electrode. Other conditions were equivalent to batteries A1-A4 to prepare and similarly evaluate lithium primary battery B3 for testing. In battery B3, the Li-Al alloy sheet of the negative electrode is pulverized to form a porous sheet.

Battery B4

In the preparation of the negative electrode, the molten liquid of Li and Al was kept in the mold at 150°C for two hours, same as battery A2, to obtain the Li-Al alloy ingot. The ingot obtained was grounded to achieve an average particle size of 200 $\mu$m, and a grounded ingot was pressed into a sheet to obtain a porous negative electrode. Other conditions were equivalent to batteries A1 to A4 to prepare and similarly evaluate lithium primary battery B4 for testing.

TABLE 1 shows evaluation results of voltage $V_1$ after pulse discharge from DOD 90% in lithium primary batteries A1-A4 and B1-B4. Batteries A1-A4 are examples and batteries B1-B4 are comparative examples. Values of the Al content, $G_\alpha$, $G_\beta$, $(G_\alpha+G_\beta)/2$, and $|G_\alpha-G_\beta|/(G_\alpha+G_\beta)$ of the Li-Al alloy sheet in each battery are indicated together with the evaluation results.

TABLE 1

| Battery | Al content (mass%) | $G_\alpha$ | $G_\beta$ | $(G_\alpha+G_\beta)/2$ | $|G_\alpha-G_\beta|/(G_\alpha+G_\beta)$ | $V_1$ (V) |
|---|---|---|---|---|---|---|
| A1 | 0.3 | 15 | 13 | 14.0 | 0.07 | 1.91 |
| A2 | 0.3 | 13 | 11 | 12.0 | 0.08 | 1.96 |
| A3 | 0.3 | 11 | 8 | 9.5 | 0.16 | 1.98 |
| A4 | 0.3 | 4 | 6 | 5.0 | 0.2 | 1.99 |
| B1 | 0.3 | 14 | 17 | 15.5 | 0.1 | 1.53 |
| B2 | 0.3 | 13 | 16 | 14.5 | 0.1 | 1.79 |
| B3 | 0.3 | - | - | - | - | 0.89 |
| B4 | 0.3 | - | - | - | - | 0.56 |

According to TABLE 1, batteries A1-A4 with $(G_\alpha+G_\beta)/2$ of 14 or less (average grain boundary number N of 8.75 or less) maintain voltage $V_1$ of 1.8 V or more after pulse discharge under the environment of -30°C even in a state of a DOD of 90%. High output characteristics at low temperatures is maintained.

In batteries B1-B2 with $(G_\alpha+G_\beta)/2$ exceeding 14, voltage $V_1$ after pulse discharge has decreased to less than 1.8 V, and high output characteristics were not maintained at low temperatures. In batteries B3 and B4 including the porous Li-Al alloy sheet for the negative electrode, voltage $V_1$ after pulse discharge has decreased to 1 V or less. The output characteristics at low temperatures have significantly decreased.

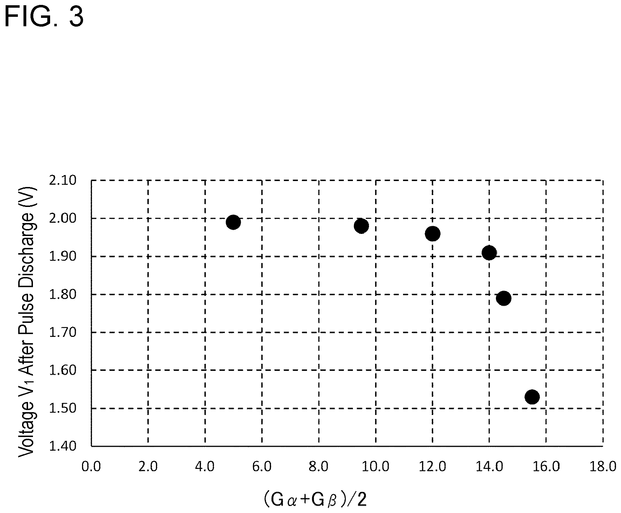

FIG. 3 is a graph plotting a relation of $(G_\alpha+G_\beta)/2$ and voltage $V_1$ after pulse discharge with respect to batteries A1-A4, B1, and B2. As illustrated in FIG. 3, $(G_\alpha+G_\beta)/2$ exceeding 14 causes voltage $V_1$ after pulse discharge to suddenly drop and significantly deteriorate the output characteristics at low temperatures. However, $(G_\alpha+G_\beta)/2$ less than 14 maintains voltage $V_1$ after pulse discharge at a high voltage level of 1.8 V or more.

Since the grain sizes of the Li-Al alloy particles increase as $(G_\alpha+G_\beta)/2$ becomes smaller, the output characteristics improve. Accordingly, voltage $V_1$ after pulse discharge is expected to increase. As illustrated in FIG. 3, voltage $V_1$ after pulse discharge increases as $(G_\alpha+G_\beta)/2$ becomes smaller. However, $(G_\alpha+G_\beta)/2$ of 12 or less provides high voltage $V_1$ close to 2V but reduces an increase of voltage $V_1$ in line with a decrease of $(G_\alpha+G_\beta)/2$.

In the preparation of the Li-Al alloy ingot, the molten liquid is necessarily cooled slowly, taking time, in order to achieve smaller $(G_\alpha+G_\beta)/2$. This deteriorates production efficiency. From the perspective of suppressing an increase of battery manufacturing costs, $(G_\alpha+G_\beta)/2$ is preferably 5 or more (average grain boundary number N of 3.12 or more).

Batteries A5 and A6

In the preparation of the negative electrode, the extrusion speed at performing extrusion molding of the Li-Al alloy ingot was changed. Other conditions were equivalent to battery A3 to prepare and similarly evaluate lithium primary batteries A5 and A6 for testing.

In battery A5, the extrusion speed was changed from 50 m/minute to 150 m/minute. In battery A6, the extrusion speed was changed to 100 m/minute. The faster the extrusion speed is, the larger the difference between $G_\alpha$ and $G_\beta$, resulting in larger grain boundary aspect ratio.

For batteries A3-A6, a pulse discharge test starting from DOD of 95% indicated below was performed in addition to the above pulse discharge test from DOD of 90%.

A constant current discharge of 2.5 mA at 25°C was performed on the lithium primary batteries immediately after assembly until the DOD becomes 95% (Discharge 2).

The batteries after Discharge 2 were placed in the environment at -30°C. Then, the batteries were discharged with pulse current of 300 mA for one second to measure battery voltage (closed circuit voltage) $V_2$ after pulse discharge.

TABLE 2 shows evaluation results. TABLE 2 shows values of the Al content, $G_\alpha$, $G_\beta$, $(G_\alpha+G_\beta)/2$, and $|G_\alpha-G_\beta|/(G_\alpha+G_\beta)$ of the Li-Al alloy sheet in each battery together with the evaluation results. Voltages $V_1$ of batteries A3 and A4 are the same as that in TABLE 1.

TABLE 2

| Battery | Al content (mass%) | $G_\alpha$ | $G_\beta$ | $(G_\alpha+G_\beta)/2$ | $|G_\alpha-G_\beta|/(G_\alpha+G_\beta)$ | $V_1$ (V) | $V_2$ (V) |
|---|---|---|---|---|---|---|---|
| A5 | 0.3 | 11 | 6 | 8.5 | 0.29 | 1.99 | 1.70 |
| A6 | 0.3 | 11 | 7 | 9.0 | 0.22 | 1.98 | 1.73 |
| A3 | 0.3 | 11 | 8 | 9.5 | 0.16 | 1.98 | 1.86 |
| A4 | 0.3 | 4 | 6 | 5.0 | 0.2 | 1.99 | 1.85 |

According to TABLE 2, all batteries A3-A6 maintain voltage $V_1$ 0f 1.8 V or more after pulse discharge from DOD of 90%. High output characteristics at low temperatures can be maintained. On the other hand, in batteries A5 and A6 with grain boundary aspect ratio A exceeding 0.2, voltage $V_2$ after pulse discharge from DOD of 95% at -30°C has dropped below 1.8V.

In contrast, in batteries A3 and A4 with grain boundary aspect ratio A of 0.2 or less, voltage $V_2$ after pulse discharge at -30°C was maintained at 1.8 V or more even in an extremely deep discharge state of DOD of 95%.

Batteries A7-A9 and B5

The Al content with respect to whole Li and Al in the Li-Al alloy ingot was changed from 0.3 mass%. Other conditions were equivalent to battery A4 to prepare lithium primary batteries A7-A9 for testing and voltage $V_1$ and voltage $V_2$ were similarly evaluated.

TABLE 3 shows evaluation results. TABLE 3 shows values of the Al content, $G_\alpha$, $G_\beta$, $(G_\alpha+G_\beta)/2$, and $|G_\alpha-G_\beta|/(G_\alpha+G_\beta)$ of the Li-Al alloy sheet in each battery together with the evaluation results. To facilitate description, results of battery A4 were duplicated from TABLE 2.

TABLE 3

| Battery | Al content (mass%) | $G_\alpha$ | $G_\beta$ | $(G_\alpha+G_\beta)/2$ | $|G_\alpha-G_\beta|/(G_\alpha+G_\beta)$ | $V_1$ (V) | $V_2$ (V) |
|---|---|---|---|---|---|---|---|
| B5 | 1.1 | 13 | 16 | 14.5 | 0.10 | 1.73 | 1.02 |
| A7 | 1.0 | 16 | 12 | 14 | 0.14 | 1.96 | 1.86 |
| A8 | 0.7 | 11 | 8 | 9.5 | 0.16 | 1.98 | 1.90 |
| A4 | 0.3 | 4 | 6 | 5.0 | 0.2 | 1.99 | 1.85 |
| A9 | 0.2 | 3 | 5 | 4 | 0.25 | 1.98 | 1.71 |

According to TABLE 3, $G_\alpha$ and $G_\beta$ decrease as the Al content in the Li-Al alloy sheet decreases. As a result, $(G_\alpha+G_\beta)/2$ decreases but grain boundary aspect ratio A tends to increase. In battery A9 with Al content less than 0.3 mass%, grain boundary aspect ratio A exceeds 0.2. Although voltage $V_1$ of 1.8 V or more was maintained after pulse discharge from DOD of 90%, voltage $V_1$ of 1.8 V or more was not maintained after pulse discharge from DOD of 95%.

In battery B5 with Al content exceeding 1.0 mass%, $(G_\alpha+G_\beta)/2$ exceeds 14 and voltages $V_1$ and $V_2$ after pulse discharge were not maintained at 1.8 V or more.

INDUSTRIAL APPLICABILITY

A non-aqueous electrolyte battery according to the present disclosure has high energy density and good discharge characteristics, and is preferably applicable to, for example, main power sources of a range of meters and memory backup power sources.

REFERENCE MARKS IN THE DRAWINGS

| | |
|---|---|
| 1 | positive electrode |
| 1a | positive collector |
| 2 | negative electrode |
| 3 | separator |
| 4 | positive electrode lead |
| 5 | negative electrode lead |
| 6 | upper insulation plate |
| 7 | lower insulation plate |
| 8 | sealing plate |
| 9 | battery case |
| 10 | lithium primary battery |

**Claims**

1. A wound non-aqueous electrolyte battery comprising:

   a positive electrode;
   a negative electrode;
   a separator provided between the positive electrode and the negative electrode; and
   a non-aqueous electrolyte, wherein
   the negative electrode includes a lithium-aluminum alloy sheet,
   the lithium-aluminum alloy sheet has surfaces including a surface of which parts are flush and connected with one another via a plurality of grain boundaries of lithium-aluminum alloy, and
   an average grain boundary number N is 8.75 or less, the average grain boundary number N being provided as $\Sigma G_i/\Sigma L_i$ by dividing $\Sigma G_i$ by $\Sigma L_i$, where $\Sigma G_i$ is a sum of numbers of grain boundaries Gi out of the plurality of grain boundaries which intersect M line segments PQi respectively connecting point Pi to point Qi on the surface of the lithium-aluminum alloy sheet, $\Sigma L_i$ is a sum of lengths Li of the M line segments PQi, M is an integer greater than 1, and i is an integer satisfying $1 < i \leq M$).

2. The wound non-aqueous electrolyte battery according to claim 1, wherein $(G_\alpha + G_\beta)/2 \leq 14$ is satisfied, where $G_\alpha$ is a number of grain boundaries out of the plurality of grain boundaries intersecting one diagonal line $\alpha$ of a rectangular region of 1.28 mm $\times$ 0.96 mm on the surface of the lithium-aluminum alloy sheet, and $G_\beta$ is a number of grain boundaries out of the plurality of grain boundaries intersecting another diagonal line $\beta$ of the rectangular region.

3. The wound non-aqueous electrolyte battery according to claim 2, wherein the number of grain boundaries $G_\alpha$ intersecting the one diagonal line $\alpha$ and the number of grain boundaries $G_\beta$ intersecting the another diagonal line $\beta$ satisfy $5 \leq (G_\alpha + G_\beta)/2 \leq 14$.

4. The wound non-aqueous electrolyte battery according to claim 2 or 3, wherein a grain boundary aspect ratio A provided as $A = |G_\alpha - G_\beta|/(G_\alpha + G_\beta)$ is 0.2 or less.

5. The wound non-aqueous electrolyte battery according to any one of claims 1 to 4, wherein an aluminum content in the lithium-aluminum alloy sheet is equal to or more than 0.3 mass% an equal to or less than 1.0 mass%.

6. The wound non-aqueous electrolyte battery according to any one of claims 1 to 5, wherein the positive electrode contains manganese dioxide.

FIG. 1

FIG. 2

FIG. 3

## INTERNATIONAL SEARCH REPORT

| International application No. |
| --- |
| **PCT/JP2022/018113** |

### A. CLASSIFICATION OF SUBJECT MATTER

*H01M 4/06*(2006.01)i; *H01M 4/134*(2010.01)i; *H01M 4/40*(2006.01)i; *H01M 4/50*(2010.01)i; *H01M 6/16*(2006.01)i; *H01M 10/052*(2010.01)i; *H01M 10/0587*(2010.01)i
FI:   H01M4/06 X; H01M4/134; H01M4/40; H01M10/0587; H01M10/052; H01M6/16 D; H01M4/50; H01M4/06 L

According to International Patent Classification (IPC) or to both national classification and IPC

### B. FIELDS SEARCHED

Minimum documentation searched (classification system followed by classification symbols)

H01M4/06; H01M4/134; H01M4/40; H01M4/50; H01M6/16; H01M10/052; H01M10/0587

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | 生川訓,福岡悟,高橋昌利,藤本実. アルミニウム添加リチウム合金負極と高比表面積二酸化マンガンを用いた円筒形リチウム一次電池. Electrochemistry. 05 January 1991, vol. 67, no. 1, pp. 56-59, (NARUKAWA, Satoshi, FUKUOKA, Satoru, TAKAHASHI, Masatoshi, FUJIMOTO, Minoru. Cylindrical Lithium Primary Battery Using a Li-Al Alloy Negative Electrode and a MnO2 Positive Electrode with High Specific Surface Area.) "2. Experiment", "3. Results and Discussion" | 1-6 |
| A | JP 52-5423 A (EXXON RESEARCH AND ENGINEERING CO.) 17 January 1977 (1977-01-17) | 1-6 |
| A | WO 2009/001526 A1 (PANASONIC CORP.) 31 December 2008 (2008-12-31) | 1-6 |
| P, A | WO 2021/125225 A1 (SUMITOMO CHEMICAL CO., LTD.) 24 June 2021 (2021-06-24) | 1-6 |

☐ Further documents are listed in the continuation of Box C.       ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 June 2022** | **12 July 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| JP | 52-5423 | A | 17 January 1977 | US | 4002492 | A | |
| | | | | GB | 1526493 | A | |
| | | | | DE | 2628752 | A | |
| | | | | FR | 2316757 | A | |
| | | | | BE | 843638 | A | |
| | | | | CA | 1052443 | A | |
| WO | 2009/001526 | A1 | 31 December 2008 | US | 2010/0068628 | A1 | |
| | | | | CN | 101595592 | A | |
| | | | | CN | 102623686 | A | |
| WO | 2021/125225 | A1 | 24 June 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005340116 A
- JP 4002050 A
- JP 63308869 A